# DEMANDE DE BREVET EUROPEEN

(11) **EP 2 845 894 A1**
(43) Date de publication de la demande: **11.03.2015**
(21) Numéro de dépôt: 14003091.7
(22) Date de dépôt: 08.09.2014
(51) Int. Cl.: C10L 5/44, B30B 11/00, B30B 15/00

(54) **Procédé de production de granulés de chauffage à base de sarments de vigne, dispositif mobile de production et granulés obtenus**

(30) Priorité: 09.09.2013 FR 1302091
(71) Demandeur: Herrmann, Charles, 67370 Woellenheim (FR)
(72) Inventeur: Herrmann, Charles, 67370 Woellenheim (FR)
(74) Mandataire: Munier, Laurent

(57) **Abrégé**

Le dispositif mobile comprend au moins un pré broyeur de sarments de vigne alimentant au moins deux broyeurs format unité (2.1) de transformation des sarments en granulés combustibles

Le procédé de production de combustibles végétaux sous forme granulés dans le dispositif comprend au moins une étape d'alimentation de sarment de vigne d'une humidité inférieure à 40 % et une étape de séchage à l'abris des intempéries et une étape de déchiquetage en champ de sarments de vigne.

Application à la production de combustibles végétaux sous forme de granulés à base de de sarments de vigne.

## Description

La présente invention concerne la production de produit combustible à partir d'une unité mobile de transformation de matière première, unité mobile exploitable sur les différents sites de production.

En premier lieu l'invention se rapporte à un procédé de transformation à l'échelle industrielle de produit, en granulés.

Depuis que le combustible fossile devient une source d'énergie qui se raréfie, dans les dernières décennies, de nombreux efforts ont été mis dans la production de matériaux d'énergies alternatives. Ces matériaux alternatifs ne doivent pas seulement être abordables et facilement disponibles, ils doivent également provenir de préférence de sources renouvelables.

Parmi les alternatives renouvelables existantes aux combustibles fossiles, la biomasse a suscité un grand intérêt. Bois, déchets agricoles, et vinicoles ou des sous-produits sont d'excellents exemples de matières énergétiques renouvelables, lorsqu'ils sont utilisés pour la production des briquettes combustibles ou de granulés.

La principale source de bois de chauffage se trouve dans les forêts. Il est simple d'imaginer que ces sources sont également des sources infinies, et qu'une augmentation de la consommation de bois de feu ne conduirait pas seulement à une augmentation du prix de ces matières premières, mais aussi à la perte de nombreuses forêts. Un arbre a besoin d'une longue période de croissance, ce qui diminue l'intérêt du bois comme source d'énergie renouvelable.

Comme une alternative aux produits à base de bois, les déchets végétaux sont annuellement renouvelables et ne nécessitent aucune parcelle supplémentaire pour leur culture.

Par conséquent, il serait utile de convertir les excédents, non nécessaires à la fertilisation du sol, pour les transformer en granulés énergétiques, cela afin de pouvoir en contrôler la parfaite combustion.

Les essais de l'inventeur ont démontrés que parmi ces déchets végétaux peux atteignent la capacité calorifique du bois. Toutefois le sarment de vigne a pu être sélectionné car il remplit cette condition en dépassant même la capacité calorifique du bois.

Le sarment de vigne sera récolté après perte des feuilles de préférence après une période de gel. Les sarments après coupe se trouvent au sol.

Deux façons de les ramasser se présentent :
1° façon : mise en botte par fagoteuse.
   Largeur 0.60m et diamètre d'environ, 45 cm pour obtenir un poids d'environ 30 à 35 Kg en bottes cylindriques.
2° façon : en vrac, ramassage. Système broyeur avec pick-up pour un passage entre les rangées de vignes.

Des études de base portant sur la granulation dans un environnement laboratoire ont été effectuées en Allemagne par le DBZF. Elles démontrent que les granulés peuvent être fabriqués avec 30% d'humidité, ce qui conduit à une densité de produit final entre 450 kg et 650 kg de matière sèche par mètre cube.

Il est à noter que la méthode de granulation est fondée sur le déchiquetage et la compression de sarments de vigne non transformés. Elle possède une densité et une humidité variables.

L'invention concerne un procédé de granulation continue sécurisé à partir d'une unité mobile. En outre, cette méthode est écologiquement propre et supprime notamment le transport des matières premières. Ce produit aura les avantages suivants :
- Le produit est 100 % d'origine recyclée et est respectueux de l'environnement car il réduit la déforestation,
- Le produit a une charge calorifique dépassant le bois de chauffage,
- Le produit transformé réduit la capacité de stockage,
- Il contribue à supprimer les maladies viticoles : Esca ; black-bead-arm ; bois noir.

La matière première utilisée dans la production de granulés avec des sarments de vigne possède les caractéristiques suivantes :
- Pouvoir calorifique supérieur à l'état humide de 6,5 % : 5270 KW / T
- Contenu calorifique inférieur : 4930 KW / T
- Emission de chlore : non détectable
- Taux de cendre à 815° : 4,8 % MS selon la norme DIN EN 14775
- Humidité : 7,5% selon la norme DIN EN 147774-1

A titre de comparaison les contenus calorifiques moyens de certains types de granulés sont présentés ainsi :
- Bois : 4700 KW / T
- Le Miscanthus : 4600 KW / T
- Paille de blé: 4300 KW/T

Le sarment de vigne a déjà été utilisé comme combustible. Toutefois, son utilisation génère encore plusieurs problèmes, à savoir :
- bourrage dans vis d'alimentation des chaudières,
- créations de cavités dans les silos,
- stockage immense et volumineux.

Il sera rappelé que l'invention concerne le choix d'un matériau spécifique qui a des propriétés dépassant celles du bois pour obtenir un combustible respectueux de l'environnement.

Le bois comme matériau de chauffage présente des limitations, même si le bois est un matériau renouvelable, il pousse lentement.

La principale source de bois de chauffage se trouve dans les forêts. Une augmentation de la consommation de bois de feu ne conduirait pas seulement à une augmentation du prix de ces matières premières, mais aussi à la perte de nombreuses forêts. En raison de la longue période de croissance des arbres.

Il ressort des essais de l'inventeur parmi plusieurs produits résidus de l'agriculture constituant de la biomasse que deux produits à pousse rapide présentent des caractéristiques de combustible atteignant celles du bois, la paille de maïs et le sarment de vigne. Or, ces produits sont saisonniers. Pour produire hors de la saison de la paille de maïs, seuls les sarments de vigne remplissent les conditions de pouvoir et contenu calorifique demandées. Le sarment de vigne est composé du pied, des feuilles, des branches et du fruit ou séparément.

Par le document « Granulateur mobile Diekra » l'idée d'un dispositif, soit une unité mobile est connue. C'est une unité mobile de pelletisation de la biomasse. Ce document à la troisième colonne, troisième paragraphe, reprend indifféremment « Miscanthus, sarments, bois, pailles, le granulateur DIEKRA débite une dizaine de tonnes par jour de granulés »

Par conséquent, ce dispositif connu n'a pas l'objet de l'invention à savoir : remplacer le bois par un produit déchet agricole, à pousse rapide, puisqu'il utilise le sarment indifféremment avec le bois ou autres produit.

Ainsi, la sélection du sarment de vigne pour remplacer le bois selon l'invention n'est pas prévu par ce document qui ne présente pas une invention mais une idée. Ce présentateur n'étant pas passé à la réalisation concrète n'a pas pu fournir de clients et a été conduit à déposer le bilan.

De plus les essais ont montrés que ce type de dispositif sans broyeur adapté ne peut pas transformer les sarments de vigne.

Ce document trop général, bien qu'intéressant et se rapportant çà la production de litière ne peut pas être considéré comme pertinent par rapport à une invention concernant les produits de chauffage.

### RESUME DE L'INVENTION

L'objet de la présente invention est de fournir un dispositif mobile fonctionnel qui comprend au moins un pré broyeur de sarments de vigne alimentant au moins deux broyeurs format unité (2.1) de transformation des sarments en granulés combustibles

L'invention se rapporte encore à un procédé de production de combustibles végétal sous forme granulés dans un dispositif pouvant être conforme à celui décrit ci-dessus comprenant au moins une étape d'alimentation de sarment de vigne d'une humidité inférieure à 40% et une étape de séchage à l'abris des intempéries

L'invention concerne aussi des combustibles végétaux sous forme de granulés à pouvoir calorifique supérieur à l'état humide de 7,5 % : 5270 KW/T et contenu calorifique inférieur à 4930 KW/T et une humidité de 7,5 % pouvant être obtenus à partir d'un procédé de transformation de de sarment de vigne pouvant être conforme à celui décrit ci-dessus.

Suivant d'autres caractéristiques du procédé :
- une étape d'alimentation en sarment de vigne comprend au moins du pied,
- des feuilles, des branches et/ou du fruit
- est ajouté au moins un autre végétal au sarment de vigne,
- est prévu une étape d'alimentation en additifs minéraux

Cette unité mobile de transformation de sarment de vigne est à l'échelle industrielle pour privilégier la production de granulés sur site avec
- Pouvoir calorifique supérieur à l'état humide de 7,5 % : 5270 KW / T ;
- Contenu calorifique inférieur : 4930 KW / T ;
- Humidité : 7,5 % selon la norme DIN EN 147774-1.

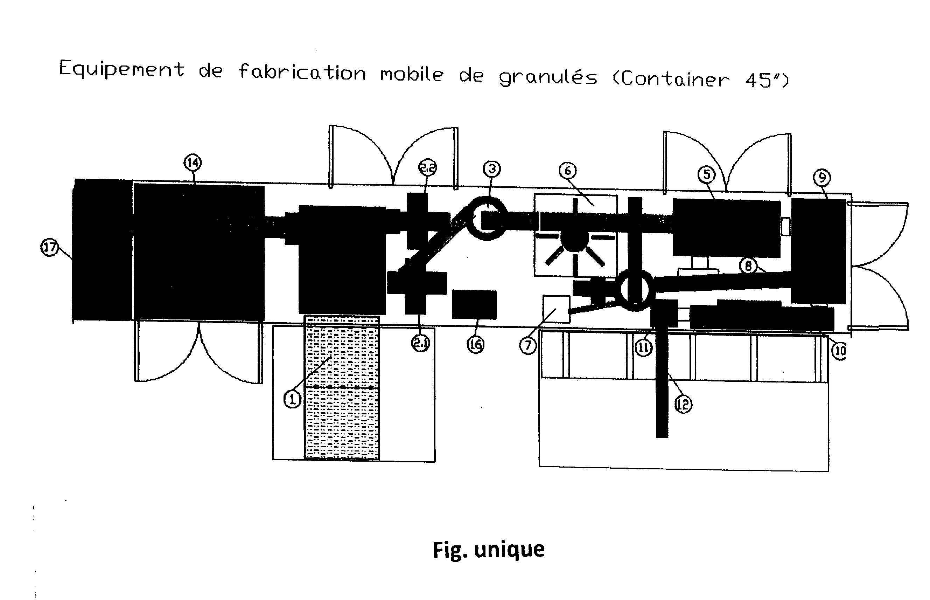

Ces objets et avantages de la présente invention apparaitront plus clairement dans la description de la figure unique détaillée ci-après :

### DESCRIPTION DES MODES DE REALISATION DE L'INVENTION

La présente invention concerne un procédé et un dispositif à l'échelle industrielle mobile pour la granulation de sarment de vignes afin d'obtenir des granulés comme combustible.

Selon un premier aspect de la présente invention, l'objet de celle-ci est résolu en fournissant une méthode comprenant :
a. la fourniture et l'alimentation de sarment de vignes, dans ledit procédé,
b. mise en ballot rondes ou déchiquetage en champ,
c. une humidité inférieure à 40 %, de préférence inférieure à 30 %,
d. stockage des dites balles à l'abri des intempéries pour séchage ultérieure. De préférence, les granulés de sarment sont convenablement stockés dans une étape future.

### DESCRIPTION DU PROCEDE DE FABRICATION

Unité de transformation de sarment de vigne montée sur un attelage semi-remorque. Tel qu'un conteneur comprenant une pièce insonorisée / de groupe 45 pieds. Conteneur en version spéciale HighCube, dimensions env. 13,70 * 2,55 * 2,90m. Sol renforcé, y compris tunnel de logement du mécanisme de roulement et trappes hydrauliques, côté opérateur, portes doubles sur la paroi d'extrémité.

Portes supplémentaires de révision de l'unité de filtration, porte de visite du déchiqueteur (face arrière). Plateforme de travail insérée sous le conteneur.

### 1- Réception de matière conditionnée déchiqueteur de balles - Utilisation mobile :

Pour le traitement de balles rondes et matière pré-broyées. Modèle équipé d'une cuve de réception suivi d'un pré broyeur alimentant deux broyeurs sarment de vigne disposés en série à travers un conduit direct. Cadre coulissant hydraulique. Châssis élévateur hydraulique, relevable et rabattable. Groupe hydraulique à commande électrique. Transfert vers le broyeur. Buse d'air y compris soufflerie.

### 2.1 Unité de broyage - double broyeur

Deux broyeurs disposés en série. Versions spéciales à puissance augmentée, géométrie spéciale des couteaux rotor et cribles spéciaux.

### 2.2 Protection des broyeurs

Un espace suffisamment ouvert entre le déchiqueteur de balles et l'entrée des broyeurs permet aux impuretés d'être extraites par gravité.

### 3. Séparateur de matière

Séparation de la matière broyée et de l'air transporteur par un séparateur à cyclone. Deux vis sans fin ascendantes servant à alimenter le récipient collecteur.

### 5. Unité de filtration - recyclage

Carter de filtration, superficie du filtre env. 90 m2, dispositif de secousses. Mécanique, ventilateur d'extraction pour le recyclage des particules fines de la presse à granulés I du refroidisseur. Séparateur à cyclone y compris écluse à roue cellulaire, soufflerie de poussière.

### 6. Récipient collecteur et doseur

Récipient silo muni d'un agitateur de fond évitant la formation d'agrégats: L 1,50 x 11,50 x h 1,00 env. Extracteur-doseur à vis sans fin et écluse à roue cellulaire pour le transfert sans pression. Contrôle du niveau de remplissage par détecteur de seuil à palette. Raccordement à l'unité de filtration.

### 7. Conditionneur

Comprenant : doseur de poudre à spirale transporteuse flexible (par exemple dosage de chaux), doseur d'eau, pompe doseuse adjuvant de viscosité pour faciliter la granulation (par ex. mélasse, huile végétale).

### 8. Convoyeur / mélangeur à vis sans fin

Vis sans fin en auge servant de mélangeur / convoyeur, y compris admission et décharge de matière, livrés muni de tous les raccords nécessaires au branchement sur le conditionneur. Commande par motoréducteur.

### 9. Granulateur TL 700 complet 90 kW

Presse à granuler TL700 (filière plate), tête à 3 galets. Système hydraulique d'ajustage de la tête de galets pendant le fonctionnement à actionneur hydraulique manuel, affichage de pression et transformateur de mesure.

### 10. Section de pré-refroidissement I tamisage

Convoyeur à tamis vibrant, longueur env. 2,7 m, version spéciale munie d'un fond tamiseur et de raccords d'aspiration pour le recyclage des déchets.

### 11. Pesage à bord

Bande de transport inclinée, munie de tasseaux, pour l'alimentation de la balance.

Balance à bascule à compteur électronique pour le pesage "à bord" des granulés fabriqués.

### 12. Bande de transfert

Bande de transfert pivotante I rabattable vers l'ensachage I le conditionnement des granulés. Longueur env. 2,2 m. Goulotte de déversement pivotante pour la distribution des granulés.

### 13. Armoire électrique - granulation mobile

Armoire de commande y compris dispositifs de commande des groupes. Affichage de la puissance des broyeurs et granulateurs, voyants de contrôle, convertisseur de fréquence, démarrage en douceur de tous les appareils de grande puissance, commande hydraulique, terminal d'affichage sur le déchiqueteur de balles.

Destinée à être raccordée à une génératrice ou possibilité de se raccorder sur le secteur par l'intermédiaire d'un interrupteur inverseur de sources.

### 14. Groupe électrogène 220 kVA - modèle à réservoir grande taille

Groupe électrogène comprenant un moteur 6 cylindres, à turbosoufflante, puissance mécanique env. 205 kW. Génératrice à excitateur AREP, 220 kVA (régime permanent env. 200 kVA). Réservoir intégré au cadre de base, capacité env. 990 litres, suffisant pour env. 22 à 30 heures de travail. Contrôleur d'isolement, tuyau d'échappement doté d'un silencieux, compensateur.

## Revendications

1. Procédé de production de combustible sous forme de granulés **caractérisé en ce qu'**il comprend au moins une étape d'alimentation de sarment de vigne d'une humidité inférieure à 30 % et une étape de séchage à l'abris des intempéries.

2. Procédé selon la revendication précédente **caractérisé en ce que** les combustibles obtenus sont des granulés à base de transformation de sarments de vigne à pouvoir calorifique supérieur à l'état humide de 7,5 % : 5270 KW / T, contenu calorifique inférieur : 4930 KW / T, humidité : 7,5 % avec des étapes suivantes :
- fourniture et alimentation de sarment de vigne y compris avec pied, branches, feuilles et/ou fruits (a),
- broyage avec humidité inférieure à 40 % de préférence 30 % (c),
- double broyage,
- extraction des impuretés,
- filtration,
- dosage,
- mélange et convoyage
- pré refroidissement,
- distribution des granulés.

3. Procédé selon l'une des revendications précédentes comprenant une étape de stockage des balles à l'abri des intempéries (d).

4. Procédé selon l'une des revendications 1 à 3 comprenant une étape de mise en balles dans laquelle les balles (b) sont cylindriques.

5. Procédé selon l'une des revendications 1 à 3 dans lequel le sarment de vigne est alimenté en vrac.

6. Procédé selon la revendication précédente dans lequel au moins un autre végétal est ajouté aux sarments de vigne.

7. Procédé selon l'une des revendications 1 à 5 dans lequel des additifs minéraux sont ajoutés au sarment de vigne.

8. Procédé de production de combustible selon l'une des revendications précédentes comprenant une étape de déchiquetage en champ de sarments de vigne.

9. Dispositif permettant la mise en oeuvre de la transformation de sarments de vigne en granulés selon l'une des revendications précédentes comprenant au moins un pré broyeur de sarments de vigne alimentant au moins deux broyeurs format unité (2.1) de transformation des sarments en granulés combustibles.

10. Dispositif selon la revendication précédente comprenant au moins une unité de transformation présentant au moins d'un espace ouvert jusqu'à un ensemble de deux broyeurs disposés en série, un séparateur à cyclone, un récipient collecteur doseur, un convoyeur mélangeur, un granulateur et un convoyeur à tamis vibrant.

11. Dispositif selon la revendication précédente comprenant un conditionneur à spirale transporteuse et/ou une pompe doseuse adjuvant de viscosité.

12. Dispositif selon l'une des revendications 9 ou 10 comprenant une bande de transport à balance à bascule et une bande de transfert avec goulotte de déversement pour la distribution de granulés et une armoire de commande et contrôle.

13. Dispositif selon l'une des revendications 9 à 12 dans lequel l'unité de transformation est un conteneur comprenant une pièce insonorisée.

14. Dispositif selon l'une des revendications 9 à 14 dans lequel l'unité est équipée d'un fond grattoir réglable (bande) et de cylindres séparateurs, d'un cadre coulissant hydraulique, d'un châssis élévateur hydraulique, relevable et rabattable, d'un Groupe hydraulique à commande électrique permettant un transfert vers le broyeur et d'une buse d'air formant soufflerie.

15. Granulés à base de sarments de vigne à pouvoir calorifique supérieur à l'état humide de 7,5 % : 5270 KW/T et contenu calorifique inférieur à 4930 KW/T et une humidité de 7,5 % pouvant être obtenus à partir d'un procédé de transformation pouvant être conforme à celui d'une des revendications 1 à 7 utilisé comme combustible.
